Europäisches Patentamt

European Patent Office

Office européen des brevets

(11) Veröffentlichungsnummer: **0 231 413**
**A1**

(12) # EUROPÄISCHE PATENTANMELDUNG

(21) Anmeldenummer: 86101402.5

(22) Anmeldetag: 04.02.86

(51) Int. Cl.⁴: **H04L 5/14** , H04B 3/20

(43) Veröffentlichungstag der Anmeldung:
12.08.87 Patentblatt 87/33

(84) Benannte Vertragsstaaten:
**AT BE CH DE FR GB IT LI NL SE**

(71) Anmelder: **Richard Hirschmann**
**Radiotechnisches Werk**
**Richard-Hirschmann-Strasse 19 Postfach**
**110**
**D-7300 Esslingen a.N.(DE)**

(72) Erfinder: **Schenkyr, Rainer, Dipl.-Ing.**
**Rüderner Strasse 32**
**D-7000 Stuttgart 61(DE)**
Erfinder: **Ludolf, Wilhelm, Dr.**
**Wilhem-Röntgenstrasse 40**
**D-7302 Ostfildern 1(DE)**

(74) Vertreter: **Stadler, Heinz, Dipl.-Ing.**
**Richard-Hirschmann-Strasse 19 Postfach**
**110**
**D-7300 Esslingen a.N.(DE)**

(54) **Schaltungsanordnung für Leitungsübergänge in lokalen Netzwerken.**

(57) Die Schaltungsanordnung für Leitungsübergänge bei lokalen Netzwerken vergleicht auftretende Digitalsignale bezüglich des zeitlichen Auftretens der Binärimpulse und ermöglicht dadurch eine sehr - schnelle, in der Größenordnung einer Impulsdauer liegende Erkennung von Signalkollisionen. Dadurch werden die Signallaufzeitverzögerungen in den Leitungsübergängen wesentlich verringert, wodurch die Übertragungslängen erheblich erweitert werden können. Die Schaltungsanordnung ermöglicht darüber hinaus mit geringem Schaltungsaufwand eine sichere Unterdrückung von Echosignalen, die an den Einspeisepunkten der Koaxialkabel auftreten sowie eine sichere Steuerung der Signalrichtung innerhalb des Transceivers selbst.

Fig. 2

## Schaltungsanordnung für Leitungsübergänge in lokalen Netzwerken

Die Erfindung betrifft Schaltungsanordnungen für Leitungsübergänge in lokalen Netzwerken zur Übertragung von Binärsignalen, mit wenigstens einem Transceiver.

Lokale Netzwerke (nachfolgend mit LAN abgekürzt) dienen der wechselseitigen Übertragung von Binärsignalen, wie dies beispielsweise bei der Vernetzung von Rechnern untereinander erforderlich ist. Derartige LANs weisen Koaxialkabel für die Signalübertragung auf, die jedoch nicht länger als 500 m sein dürfen, da sich die Binärimpulse über diese Länge hinweg so sehr "verschmiert" bzw. ihre Rechteckimpulsform verloren haben, daß jeweils nach der genannten Länge ein sogenannter Repeater vorgesehen sein muß, um aus den "verschmierten" Impulsen für die nächste Übertragungsstrecke wieder ordentliche Rechteckimpulse zu regenerieren, so daß eine sichere Digitaldatenübertragung gewährleistet ist.

Eine weitere Aufgabe des Repeaters besteht darin, festzustellen, ob auf den beiden über Transceiver mit dem Repeater verbundenen Kabeln gleichzeitig Signale gesendet werden, um eine derartige Signalkollision den Sendern zu melden, damit sie ihre Signalübertragung einstellen. Die Kollisionserkennung erfolgt in den herkömmlichen Transceivern durch Mittelung der Binärimpulse, die auf der Leitung auftreten. Wenn zwei oder mehr Teilnehmer gleichzeitig senden, steigt das Flächenintegral der Rechteckimpulse im Vergleich zu dem Fall an, wenn nur ein Teilnehmer Binärsignale auf das Koaxialkabel einspeist, also keine Signalkollision vorliegt. Bei Erreichen eines bestimmten Integral-bzw. Mittelwerts der Impulsfläche teilt der Transceiver dem Repeater dann die Signalkollision mit. Der Repeater kann jetzt die Sender zur Einstellung des Sendevorgangs entsprechend informieren. Wegen der Mitteilung bzw. Integration über eine Anzahl von Impulsen hinweg beträgt die für die Erkennung und Weitermeldung einer Signalkollision erforderliche Zeit einer Transceiver-Repeater-Transceiver-Kombination bei einer Bitrate von 10 Mbit/sec ca. 2 bis 3 Mikrosekunden. Im Hinblick auf die Tatsache, daß ein 500 m langes Kabelsegment eine Laufzeitverzögerung von mindestens 2 Mikrosekunden aufweist und nach den Forderungen für LANs auf der Gesamtübertragungsstrecke die Laufzeitverzögerung nicht größer als 20 Mikrosekunden sein darf, ist die dem Repeater eigene Laufzeitverzögerung von 2 bis 3 Mikrosekunden, wie zuvor beschrieben, eine starke Beschränkung für LANs, da mit den herkömmlichen Repeatern nur Übertragungslängen von ca. 2,5 km erreicht werden können. Einzelheiten über LANs und Forderungen an LANs sind beispielsweise den "IEEE Standards for Local Area Networks 802.3-1985", veröffentlicht vom Institut of Electrical and Electronics Engineers, Inc., New York, insbesondere Seiten 118 ff, zu entnehmen.

Der Erfindung liegt daher die Aufgabe zugrunde, eine Schaltungsanordnung für Leitungsübergänge in LANs zu schaffen, die praktisch verzögerungsfrei innerhalb der Zeitdauer eines einzigen Datenbits ($\leq$ 100 ns) Signalkollisionen erkennt und verarbeitet, sowie an den Einspeisepunkten des Koaxialkabels auftretende Signalreflexionen verhindert und die Signalrichtung steuert, wobei der schaltungsmäßige Aufwand klein gehalten werden soll.

Ausgehend von der eingangs genannten Schaltungsanordnung wird diese Aufgabe erfindungsgemäß dadurch gelöst, daß der Transceiver einen auf das zeitliche Auftreten von Binärsignalen ansprechenden Vergleicher aufweist, an dessen einem Eingang ein in einer Stufe um die Reflexionslaufzeit verzögertes auszusendendes Signal anliegt, und dessen anderer Eingang mit einer Leitung für das eingehende Signal verbunden ist, und daß in dieser Leitung eine vom Ausgangssignal des Vergleichers gesteuerte Torschaltung vorgesehen ist, die in den leitenden Zustand versetzt wird, wenn die an den beider Eingängen des Vergleichers auftretenden Impulse der Binärsignale zeitlich versetzt sind.

Im Gegensatz zu der herkömmlichen Kollisionserkennung durch Mittelung bzw. Integrierung einer Reihe von Binärimpulsen ist es mit der erfindungsgemäßen Schaltungsanordnung durch den Vergleich der beiden Signale im Vergleicher in der Größenordnung einer einzigen Bitdauer möglich, festzustellen, ob Kollision vorliegt. Darüber hinaus ist es mit diesem zeitlichen Impulsvergleich möglich, bei Auftreten einer Signalkollision durch Versetzen der Torschaltung in den leitenden Zustand sofort in beiden Richtungen Signale auszusenden bzw. weiterzuleiten, so daß von den Sendern dadurch der Kollisionszustand erkannt und der Sendevorgang eingestellt werden kann. Abgesehen von der gegenüber den herkömmlichen Schaltungen um mindestens eine Größenordnung - schnelleren Erkennung und Auswertung einer Signalkollision ist für diese Aufgabe ein wesentlich geringerer Schaltungsaufwand erforderlich, als dies bei herkömmlichen Einrichtungen der Fall ist.

Da die Laufzeitverzögerung in der erfindungsgemäßen Schaltung gegenüber 2 bis 3 $\mu$s bei herkömmlichen Einrichtungen mit der erfindungsgemäßen Schaltung für einen Leitungsübergang auf unter 100 ns, also auf weniger als eine Größenordnung verringert werden kann, ist es nunmehr möglich, die Gesamtübertragungsstrecke von LANs mindestens auf das Doppelte zu erweitern.

Es sei darauf hingewiesen, daß das Ausgangssignal des Vergleichers auch in anderer Weise als für das Schalten der in der Leitung für das eingehende Signal liegenden Torschaltung verwendet werden kann. Beispielsweise kann eine zusätzliche Schaltungsanordnung vorgesehen sein, die der Auswertung des Vergleicherausgangssignals dient und entsprechende Funktionen ausübt, um den Sendern den Kollisionsvorgang mitzuteilen.

Gemäß einer bevorzugten Ausführungsform der Erfindung ist vorgesehen, daß die Torschaltung in den leitenden Zustand versetzt wird, wenn die an den beiden Eingängen des Vergleichers auftretenden Impulse der Binärsignale mindestens um eine Toleranz-Zeitdauer Δt zeitlich versetzt sind. Auf diese Weise kann den Bauteiletoleranzen und sich ändernden Laufzeitverzögerungen in verwendeten Bauteilen Rechnung getragen werden.

Gemäß einer weiteren bevorzugten Ausführungsform der Erfindung wird die Torschaltung in den nicht-leitenden Zustand geschaltet, wenn die an den Eingängen des Vergleichers auftretenden Impulse jeweils im wesentlichen gleichzeitig auftreten. Wie im weiteren noch im einzelnen erläutert werden wird, ist die Verzögerungsstufe dafür vorgesehen, die Laufzeit auszugleichen, die das auszusendende Signal benötigt, wenn es am Einspeisepunkt des Koaxialkabels reflektiert wird und über die Leitung für das eingehende Signal wieder zum Vergleicher gelangt. Treten also die Binärimpulse an den beiden Eingängen des Vergleichers im wesentlichen gleichzeitig auf, bedeutet dies, daß von diesem Transceiver nur gesendet und nicht empfangen wird, so daß keine Signalkollision vorliegt. In diesem Falle wird die Torschaltung in den nicht-leitenden Zustand versetzt, um ein Echo bzw. eine Reflexion des auszusendenden Signals in die Richtung, aus der es kommt, zu verhindern. Auf diese Weise löst die erfindungsgemäße Schaltung mit einfachsten schaltungstechnischen Mitteln die Aufgabe, ein Echo zu verhindern und die Steuerung der Signalrichtung zu bewirken.

In diesem Zusammenhang sei darauf hingewiesen, daß sich bei der vorliegenden Erfindung die Schaltungsanordnung für die Kollisionserkennung, für die Vermeidung eines Signalechos und für die Steuerung der Signalrichtung im Transceiver selbst und nicht aufgeteilt in einem unabhängigen, herkömmlichen Transceiver und einem Repeater, die über ein Kabel verbunden sind, befindet. Dadurch ist die Laufzeit des Reflexionssignals fest definiert, so daß diese Reflexionslaufzeit sehr genau einkalkuliert und bei der Kollosions signal-Auswertung bzw. bei der Unterdrückung von Echos berücksichtigt werden kann. Derartige definierte Reflexionslaufzeiten sind bei der Verwendung herkömmlicher Repeater nicht gegeben, die je nach Anwendungsfall über verschieden lange Kabel mit dem Transceiver bzw. mit den Transceivern verbunden sind.

Um Bauteiletoleranzen und langzeitliche Änderungen der Bauteileeigenschaften bezüglich der Laufzeitverzögerungen im Transceiver zu berücksichtigen, ist gemäß einer bevorzugten Ausführungsform vorgesehen, daß die Torschaltung in den nicht-leitenden Zustand geschaltet wird, wenn die an den Eingängen des Vergleichers auftretenden Impulse nicht mehr als eine Toleranzzeitdauer Δt zeitlich zueinander versetzt sind.

Tritt im Receiver kein auszusendendes Signal auf, während ein einkommendes Signal festgestellt wird, so wird die Torschaltung gemäß einer weiteren Ausführungsform der Erfindung in den leitenden Zustand geschaltet, wenn in diesem Falle nur am Vergleicher-Eingang für das eingehende Signal ein Signal anliegt.

Eine weitere bevorzugte Ausführungsform der Erfindung ist dadurch gekennzeichnet, daß für einen Leitungsübergang zwischen zwei Koaxialkabeln für jedes der Koaxialkabel jeweils ein Transceiver mit Vergleicher und Verzögerungsstufe vorgesehen ist. In diesem Falle haben die beiden Transceiver in dem Leitungsübergang eine komplementäre Funktion. Geht beim einen Transceiver ein Informationssignal ein, ohne daß eine Signalkollision vorliegt, so wird die Torschaltung, wie zuvor beschrieben, in den leitenden Zustand versetzt, und die Torschaltung des Transceivers, der dieses Signal an das andere Koaxialkabelsegment wieder aussendet, befindet sich, wie ebenfalls zuvor bereits beschrieben, in dieser Situation im nicht-leitenden Zustand. Durch die Verbendung zweier dieser erfindungsgemäßen Transceiver in einem Leitungsübergang ist damit die Echo-Unterdrückung und die Steuerung der Signalrichtung sicher gewährleistet.

Im Falle der vorzugsweisen Verwendung einer erfindungsgemäßen Schaltung für den Leitungsübergang zwischen einem Koaxialkabel und einem Lichtwellenleiter ist nur koaxialkabelseitig ein Transceiver mit einem Vergleicher und einer Verzögerungsstufe bzw. eine Schaltungsanordnung für den Transceiver gemäß der vorliegenden Erfindung vorgesehen. Im Falle des Leitungsübergangs zwischen einem Koaxialkabel und einem Lichtwellenleiter ist die Gesamtschaltungsanordnung daher noch einfacher, da am Ende des Lichtwellenleiters keine Reflexion des auf den Lichtwellenleiter zu übertragenden Signals erfolgen kann, weil bei Lichtwellenleitern für jede Übertragungsrichtung jeweils ein eigener Lichtwellenleiter vorgesehen ist.

Ist für die Übertragungsleitung eine größere Entfernung vorgesehen, so kann, wie bei herkömmlichen LANs auch, im Zusammenhang mit der vorliegenden Schaltungsanordnung für Leitungsübergänge ein Repeater zwischen den Transceivern vorgesehen sein, dessen Aufgabe sich in diesem Falle jedoch auf die Regeneration der Binär-Rechteckimpulse, wie eingangs erläutert, beschränkt. Die weiteren Aufgaben herkömmlicher Repeater, die Reflexion an den Koaxialkabel-Enden zu unterbinden und/oder die Steuerung der Signalrichtung vorzunehmen, entfallen jedoch bei der Verwendung von Repeatern im Zusammenhang mit der vorliegenden Erfindung, so daß wesentlich einfachere und kostengünstigere Repeater verwendet werden können.

Die Erfindung wird nachstehend anhand der Zeichnungen beispielsweise näher erläutert. Es zeigen:

Fig. 1 die Darstellung einer Ausführungsform der erfindungsgemäßen Schaltungsanordnung für Leitungsübergänge zwischen zwei Koaxialkabel-Segmenten, in schematischer Darstellung,

Fig. 2 ein Blockschaltbild einer Ausführungsform der Erfindung in detaillierter Darstellung,

Fig. 3 Impulsfolgen, die zur Erläuterung der Funktion der in Fig. 2 dargestellten Schaltungsanordnung dienen und

Fig. 4 eine Ausführungsform der erfindungsgemäßen Schaltungsanordnung für Leitungsübergänge zwischen einem Koaxialkabel und einem Lichtwellenleiter.

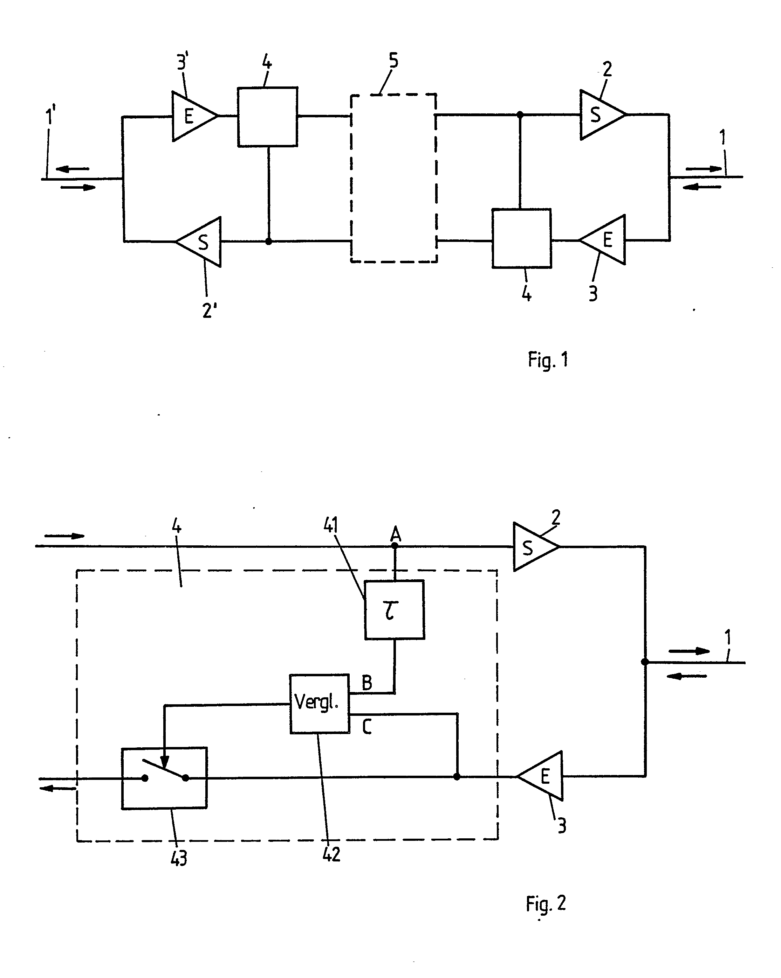

Fig. 1 zeigt ein Beispiel der erfindungsgemäßen Schaltungsanordnung für Leitungsübergänge zwischen zwei Koaxialkabeln 1 und 1'. Der jeweils einem Koaxialkabel zugeordnete Transceiver besteht jeweils aus einem Leitungstreiber bzw. -sender 2 bzw. 2', einem Leitungsempfänger 3 bzw. 3' sowie einer Logikschaltung 4 bzw. 4', die die Aufgabe hat bzw. haben, Signalkollisionen verzögerungsfrei zu erkennen und zu verarbeiten, eine Reflexion der auszusendenden Signale am Koaxialkabel-Ende zu verhindern und die Signalrichtung zu steuern. Gegebenenfalls ist ein strichliniert angedeuteter Repeater 5 zwischen den Transceivern vorgesehen, der gemäß der vorliegenden Erfindung lediglich die Aufgabe hat, die Rechteckimpulse der Binärsignale zu regenerieren, wenn diese nach einer längeren Übertragungsstrecke nicht mehr als Rechteckimpulse, sondern "verschmiert" auftreten. In diesem Zusammenhang sei erwähnt, daß die Logikschaltung 4 bzw. 4' fest im Transceiver verdrahtet ist und keine Forderungen dahingehend aufgestellt werden müssen, wie, wo und in welcher Entfernung der Repeater 5 bezüglich der Transceiver angeordnet ist.

Fig. 2 zeigt eine erfindungsgemäße Ausführungsform des Transceivers und insbesondere der Logikschaltung 4, die in Fig. 2 strichliniert umrandet ist. In Fig. 2 sind entsprechende Elemente und Teile mit denselben Bezugzeichen wie in Fig. 1 versehen.

Das Ende des Koaxialkabels 1 ist sowohl mit dem Ausgang des Leitungssenders 2 als auch mit dem Eingang des Leitungsempfängers 3, verbunden. Die Logikschaltung 4 enthält eine Verzögerungsstufe 41, die einerseits mit dem Eingang des Leitungssenders 2 und andererseits mit einem Eingang eines Vergleichers 42 verbunden ist, dessen anderer Eingang am Ausgang des Leitungsempfängers 3 liegt. Der Ausgang des Vergleichers 42 ist mit dem Steuereingang einer Torschaltung 43 verbunden, die in der Leitung für das eingehende Signal nach dem Eingangsempfänger 3 liegt.

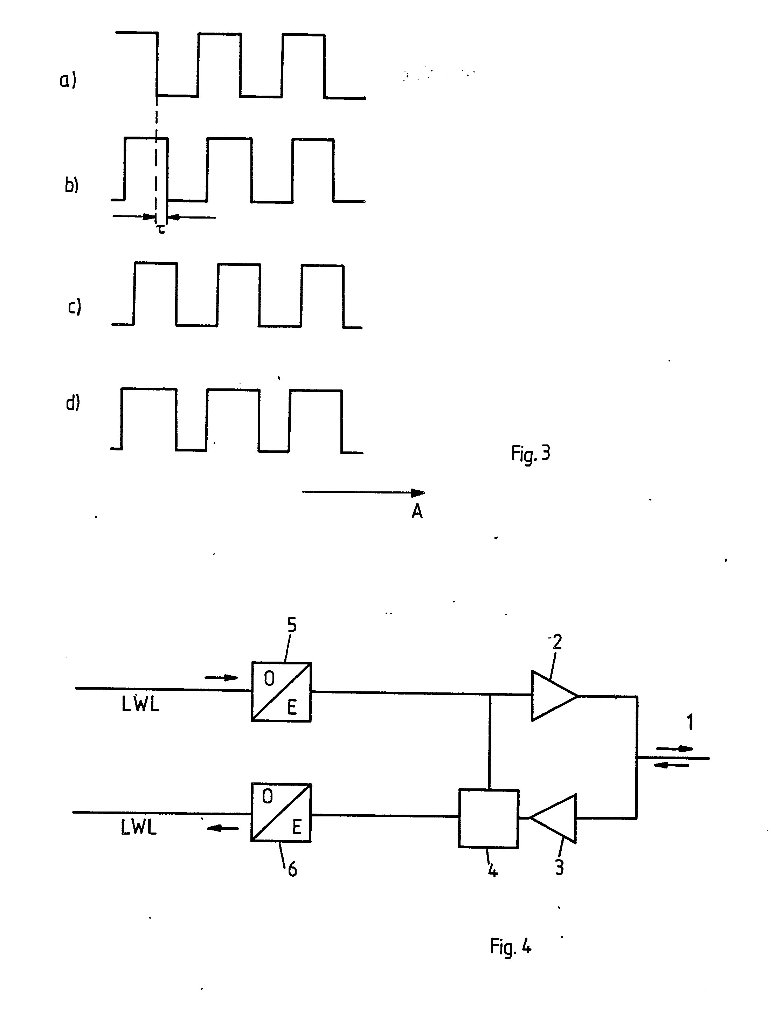

Die Funktionsweise der in Fig. 2 dargestellten Schaltungsanordnung, insbesondere der dort schematisch dargestellten Ausführungsform der Logikschaltung 4 gemäß der vorliegenden Erfindung wird nachfolgend anhand der in Fig. 3 dargestellten Signalverläufe erläutert. Das vom Koaxialkabel 1' (vgl. Fig. 1) kommende und vom Leitungssender 2 an das Koaxialkabel 1 abzugebende Binärsignal hat am Schaltungspunkt A den in Fig. 3a dargestellten Signalverlauf. Läuft dieses Signal vom Schaltungspunkt A über den Leitungssender 2 zum Anschluß des Koaxialkabels 1 und weiter über den Leitungsempfänger 3 zum unteren Eingang C des Vergleichers 42, so ergibt sich durch die Laufzeitverzögerung gegenüber dem am Schaltungspunkt A auftretenden Impulssignal das in Fig. 3b dargestellte, gegenüber Fig. 3a zeitlich versetzte Impulssignal.

Die Verzögerungsstufe 41 ist hinsichtlich der Verzögerungszeit so gewählt, daß das am Schaltungspunk A auftretende Impulssignal um die Laufzeit des Reflexionssignals zwischen dem Schaltungspunkt A und dem Schaltungspunkt C verzögert wird. Der am oberen Eingang des Vergleichers 42 bzw. am Schaltungspunkt B auftretende Signalverlauf entspricht dann dem in Fig. 3b dargestellten Digitalsignal. Da die Digitalimpulse an den Eingängen B und C des Vergleichers 42 in diesem Falle gleichzeitig auftreten und angenommen wird, daß vom Koaxialkabel 1 kein Signal kommt, gibt der Vergleicher 42 als Ausgangssignal ein Null-Signal ab, das die Torschaltung 43 in den nicht-leitenden Zustand bringt bzw. hält. Auf diese Weise ist sichergestellt, daß ein Signal, das vom Koaxialkabel 1' (vgl. Fig. 1) kommt und über den Leitungssender 2 in das Koaxialkabel 1 eingespeist wird, nicht als Reflexionssignal wieder in das Koaxialkabel 1' (vgl. Fig. 1) gelangt, da in diesem Falle -wie erläutert -die Torschaltung 43 im nicht-leitenden Zustand und damit die zum Koaxialkabel 1' - (vgl. Fig. 1) führende Leitung unterbrochen ist. Auf diese Weise ist auf einfache Weise die Unterbindung von Reflexions-bzw. Echosignalen gewährleistet.

Im Falle einer Übertragung vom Koaxialkabel 1 zum Koaxialkabel 1' (vgl. Fig. 1) und der Annahme, daß keine Signalkollision, also keine Signalübertragung vom Koaxialkabel 1' zum Koaxialkabel 1 vorliegt, liegt am Eingang C des Vergleichers 42 ein Signal an, wie es beispielsweise in Fig. 3c dargestellt ist. Da am Eingang B des Vergleichers 42 kein Signal auftritt, ergibt sich ein Ausgangssignal des Vergleichers 42, das die Torschaltung 43 in den leitenden Zustand versetzt und hält. Das über das Koaxialkabel 1 gesendete Signal gelangt also in den dem Koaxialkabel 1' (vgl. Fig. 1) zugeordneten Transceiver, in dem derselbe Vorgang stattfindet wie in dem dem Koaxialkabel 1 zugeordneten Transceiver, wenn dieser ein Signal an das Koaxialkabel 1 abgibt, wie dies zuvor beschrieben wurde. Oder anders ausgedrückt, die Logikschaltung 4', die in derselben Weise wie die in Fig. 2 ausführlicher dargestellte Logikschaltung 4 aufgebaut ist, verhindert in diesem Falle, daß Reflexionssignale, die am Einspeisepunkt des Koaxialkabels 1' entstehen, auf das Koaxialkabel 1 gelangen, weil sich die entsprechende Torschaltung der Logikschaltung 4' entsprechend im nicht-leitenden Zustand befindet.

Im Kollisionsfall, d.h. wenn der Duplexer bzw. der Leitungsübergang sowohl vom Koaxialkabel 1' als auch vom Koaxialkabel 1 (vgl. Fig. 1) ein Signal erhält, liegt am Eingang B des Vergleichers 42 das gegenüber dem Schaltungspunkt A um die Dauer τ verzögerte, vom Koaxialkabel 1' kommende Signal gemäß Fig. 3b und am Eingang C das über das Koaxialkabel 1 gesendete Signal gemäß Fig. 3c an. Da die Impulse an den Eingängen B und C des Vergleichers 42 nicht gleichzeitig auftreten -die ODER-Verknüpfung der Eingangssignale ist in Fig. 3d dargestellt-erzeugt der Vergleicher 42 ein Ausgangssignal, das die Torschaltung 43 in den leitenden Zustand versetzt. Dies bedeutet, daß sowohl der dem Koaxialkabel 1 zugeordnete Sender als auch der dem Koaxialkabel 1' zugeordnete Sender während des Sendevorgangs ihrerseits Signale zugeleitet bekommen, so daß sie den Kollisionsvorgang festellen und den Sendevorgang unterbrechen können.

Wie bereits beschrieben, ist die Erkennung, ob ein Kollisionsfall vorliegt, innerhalb des Zeitraums eines einzigen Binärbits möglich, da im Gegensatz zu herkömmlichen Schaltungen keine Mittelwertbildungen oder Integrationen vorgenommen, sondern lediglich ein Bitvergleich durchgeführt wird. Die Erkennung und damit die Verzögerungszeit, die durch eine derartige Erkennungsschaltung hervorgerufen wird, ist daher denkbar schnell bzw. kurz, was die bereits erläuterten vorteilhaften Konsequenzen für ein LAN insbesondere bezüglich der Übertragungslängen zur Folge hat.

Da die Bauelemente, aus denen der Leitungssender 2 und der Leitungssender 3 sowie die Verzögerungsstufe 1 aufgebaut sind, Toleranzen aufweisen und/oder kurz-oder langzeitliche Änderungen, beispielsweise durch Temperatureinflüsse, erfahren, die Laufzeit des Reflexionssignals bzw. die Verzögerungszeit im Verzögerungsglied 41 also nicht genau eingehalten werden kann, ist es vorteilhaft, beim Vergleich der an den Eingängen B und C des Vergleichers 42 anliegenden Signale eine Toleranzdauer Δ t vorzusehen, während der die Torschaltung 43 in den nicht-leitenden Zustand versetzt wird. Diese Toleranz-Überlegungen sind praktischer Art und können je nach den gegebenen Umständen vom Fachmann gewählt und eingestellt werden.

Als weitere Ausführungsform kann das Ausgangssignal des Vergleichers vor der Steuerung der Torschaltung 43 etwa in einer separaten, nachgeschalteten Stufe verarbeitet werden, wobei diese Schaltungsstufe je nach den vorliegenden Bedingungen ein-bzw. verstellbar ist, um die Kriterien für die Steuerung der Torschaltung 43 gegebenenfalls je nach den vorliegenden Bedingungen zu modifizieren. Es ist weiterhin möglich, die Kollisionserkennung neben bzw. statt des Durchschaltens der Torschaltung 43 auch mittels einer separaten Schaltungsstufe vorzunehmen. Durch Abwandlungen dieser Art wird dabei der Erfindungsgedanke nicht verlassen.

Fig. 4 zeigt eine erfindungsgemäße Ausführungsform für Leitungsübertragungen zwischen einem Koaxialkabel und einem Lichtwellenleiter. In diesem Falle ist ein Transceiver mit der erfindungsgemäßen Logikschaltung 4 lediglich für das Koaxialkabel 1 vorgesehen, da eine Duplexerschaltung lichtwellenleiter-seitig nicht erforderlich ist, weil für jede Fortpflanzungsrichtung jeweils ein getrennter Lichtwellenleiter vorgesehen ist. Die optischen Signale müssen dabei mittels eines optoelektronischen Wandlers 5 in elektrische Signale und die elektrischen Signale mittels eines elektrooptischen Wandlers 6 in optische Signale umgesetzt werden. Lichtwellenleiter-seitig ist natürlich auch keine Maßnahme zur Unterdrückung von Echosignalen erforderlich, da diese naturgemäß nicht auftreten können.

Selbstverständlich ist es auch hier wiederum möglich, zwischen dem Koaxial-Transceiver und dem optischen Transceiver einen Repeater vorzusehen, der "verschmierte" Rechteckimpulse wieder in einwandfreie Rechteckimpulse für die weitere Übertragung umsetzt. Obgleich die vorliegende Erfindung anhand von Ausführungsbeispielen beschrieben und erläutert wurde, stellen diese keine Einschränkung des Erfindungsgedankens dar. Dem Fachmann ist es vielmehr möglich, Ausgestaltungen und Abwandlungen vorzusehen, ohne daß dadurch der Erfindungsgedanke verlassen wird.

## Ansprüche

1. Schaltungsanordnung für Leitungsübergänge in lokalen Netzwerken zur Übertragung von Binärsignalen mit wenigstens einem Transceiver, dadurch gekennzeichnet, daß der Transceiver einen Vergleicher (42) aufweist, an dessen einem Eingang (B) ein in einer Verzögerungsstufe (41) um die Reflexionslaufzeit verzögertes, auszusendendes Signal anliegt, und dessen anderer Eingang (C) mit einer Leitung für das eingehende Signal verbunden ist, und daß in dieser Leitung eine vom Ausgangssignal des Vergleichers (42) gesteuerte Torschaltung (43) vorgesehen ist, die in den leitenden Zustand versetzt wird, wenn die an den beiden Eingängen (B, C) des Vergleichers (42) auftretenden Impulse der Binärsignale zeitlich versetzt sind.

2. Schaltungsanordnung nach Anspruch 1, dadurch gekennzeichnet, daß die Torschaltung - (43) in den leitenden Zustand versetzt wird, wenn die an den beiden Eingängen (B, C) des Vergleichers (42) auftretenden Impulse der Binärsignale wenigstens um eine Toleranz-Zeitdauer $\Delta t$ zeitlich zueinander versetzt sind.

3. Schaltungsanordung nach Anspruch 1 oder 2, dadurch gekennzeichnet, daß die Torschaltung - (43) in den nicht-leitenden Zustand versetzt wird, wenn die an den Eingängen (B, C) des Vergleichers (42) auftretenden Impulse der Binärsignale jeweils im wesentlichen gleichzeitig auftreten.

4. Schaltungsanordnung nach Anspruch 3, dadurch gekennzeichnet, daß die Torschaltung - (43) in den nicht-leitenden Zustand geschaltet wird, wenn die an den Eingängen (B, C) des Vergleichers (42) auftretenden Impulse der Binärsignale weniger als eine Toleranz-Zeitdauer $\Delta t$ zeitlich zueinander versetzt sind.

5. Schaltungsanordnung nach einem der Ansprüche 1 bis 3, dadurch gekennzeichnet, daß die Torschaltung - (43) in den leitenden Zustand versetzt wird, wenn nur am Vergleicher-Eingang (C) für das eingehende Signal Impulse anliegen.

6. Schaltungsanordnung nach einem der Ansprüche 1 bis 5, dadurch gekennzeichnet, daß für einen Leitungsübergang zwischen zwei Koaxialkabeln für jedes der Koaxialkabel jeweils ein Transceiver mit wenigstens einem Vergleicher (42) und einer Verzögerungsstufe (41) vorgesehen ist (Fig. 1).

7. Schaltungsanordnung nach einem der Ansprüche 1 bis 5, dadurch gekennzeichnet, daß für einen Leitungsübergang zwischen einem Koaxialkabel und einem Lichtwellenleiter nur koaxialkabelseitig ein Transceiver mit wenigstens einem Vergleicher (42) und einer Verzögerungsstufe (41) vorgesehen ist - (Fig. 1).

8. Schaltungsanordnung nach einem der Ansprüche 1 bis 7, dadurch gekennzeichnet, daß zwischen den Transceivern ein Repeater (5) vorgesehen ist (Fig. 1).

Fig. 1

Fig. 2

a)

b)

$\tau$

c)

d)

A

Fig. 3

LWL

O / E  5

2

1

O / E  6

LWL

4  3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENTS ABSTRACTS OF JAPAN, Band 9, Nr. 318 (E-366)[2041], 13. Dezember 1985; & JP - A - 60 152 153 (SEIICHI MIYAZAKI) 10-08-1985 | 1 | H 04 L 5/14 <br> H 04 B 3/20 |
| A | IDEM | 2-8 | |
| | --- | | |
| X | DE-A-2 134 090 (WANDEL) <br> * Seite 5, Zeile 6 - Seite 6, Zeile 5 * | 1 | |
| A | | 2-8 | |
| | --- | | |
| A | AT-B- 363 128 (SIEMENS) <br> * Anspruch * | 1,6,7 | |
| | | | RECHERCHIERTE SACHGEBIETE (Int. Cl.4) |
| | --- | | |
| A | IBM TECHNICAL DISCLOSURE BULLETIN, Band 21, Nr. 2, Juli 1978, Seiten 792,793, New York, US; R.A.CLAUSON: "Serial data line repeater" <br> * Insgesamt * | 1 | H 04 L <br> H 04 B |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 22-09-1986 | VERSLYPE J.P. |

EPA Form 1503 03 82